# EUROPEAN PATENT APPLICATION

(11) **EP 4 772 380 A1**
(43) Date of publication of application: **08.07.2026**
(21) Application number: 25209150.9
(22) Date of filing: 16.10.2025
(51) Int. Cl.: B60K 35/10, B60K 35/22, B60K 35/233, B60K 35/29, B60K 35/53, B60K 35/60, B60K 35/81, G06F 3/0484, G06F 3/04886

(54) **DISPLAY MODULE**

(30) Priority: 03.01.2025 KR 20250001112
(71) Applicant: Hyundai Mobis Co., Ltd., Gangnam-gu Seoul 06141 (KR)
(72) Inventor: KIM, Kyung Hoon, Yongin-si, Gyeonggi-do 16891 (KR); LEE, Ung Gu, Yongin-si, Gyeonggi-do 16891 (KR); CHOE, Seung Hyeong, Yongin-si, Gyeonggi-do 16891 (KR)
(74) Representative: Jung, Minkyu

(57) **Abstract**

A display module includes a windshield display disposed in one region of a windshield, a center display disposed at the front of a cockpit module of a vehicle to move up and down, and a control plate disposed at the front of the center display. At least a region of the center display displays a media function, and at least a region of the windshield display is linked to the center display to display the media function based on an input of a user.

## Description

### CROSS REFERENCE TO RELATED APPLICATION

This application claims priority to and the benefit of Korean Patent Application No. 10-2025-0001112, filed on January 3, 2025, the disclosure of which is incorporated herein by reference in its entirety.

### BACKGROUND

### 1. Field of the Invention

The present invention relates to a display module, and more particularly, to a display module that is capable of providing a media function.

### 2. Discussion of Related Art

Recently, as people's vehicle usage time has increased and people spend more time inside their vehicles, vehicles are now being developed to provide more functions to users.

A plurality of displays may be used inside a vehicle to easily control and display numerous functions of the vehicle. A user may operate a display to receive various functions and even control the functions of a vehicle.

However, it is not easy to provide displays of sufficient sizes in the limited space inside a vehicle, and it is also difficult to operate each of the displays. Particularly, since a driver who is driving needs to operate the display while looking ahead and around the vehicle, it is important not to be distracted by operating the display.

There is a need for a display that can be implemented in a sufficient size to provide a user with various functions and a vehicle display by which the user can easily operate the display.

### SUMMARY

One embodiment of the present invention is directed to providing a display module that is capable of providing a media playback function to a user of a vehicle.

The task to be achieved by the present invention is not limited to the task described above, and other tasks not described herein will be clearly understood by those skilled in the art from the description below.

A display module according to one embodiment of the present invention includes a windshield display disposed in one region of a windshield, a center display disposed at a front of a cockpit module of a vehicle and configured to move up and down, and a control plate disposed at the front of the center display.

In some embodiments, at least a region of the center display may be configured to display a media function, and at least a region of the windshield display is linked to the center display and configured to display the media function based on an input of a user.

In some embodiments, the center display may include a background region disposed on an upper side of the control plate, a first window covering a portion of the background region on the upper side of the control plate, and a second window displayed on a lower side of the control plate, and the media function may be displayed in the background region.

In some embodiments, the background region may have its boundary reset according to an arrangement of the center display, and the display of the media function displayed in the background region may be configured to change in response to a size of the background region.

In some embodiments, the media function displayed in the background region may be controlled through an operation button displayed on the center display or the control plate.

In some embodiments, when playing media on the center display in a full screen mode, the display of a region other than the background region may disappear.

In some embodiments, in the full screen mode, when an input is provided to the center display or the control plate, a region to which the input is provided may be activated for a preset time.

In some embodiments, the center display may be configured to display a link icon, and the user may select a region of the windshield display in which the media function is displayed by providing an input to the link icon.

In some embodiments, when an input is provided to the link icon, a link widget may be displayed, and the link widget may display a list of speakers and display regions included in the windshield display linked to the center display.

In some embodiments, the windshield display may include a plurality of display regions, and the plurality of display regions may be configured to play different media.

In some embodiments, at least a region of the windshield display may be linked to the center display to display the media function, and a size of the region in which the media function is displayed may be adjusted based on operation of the center display.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view showing a display module according to one embodiment of the present invention;
FIG. 2 is a view showing a state in which the display content changes depending on the arrangement of a center display according to the embodiment;
FIGS. 3 and 4 are views showing the center display displaying media in a full screen mode according to the embodiment;
FIG. 5 is a view showing icons displayed in the center display according to the embodiment and a window displayed when an input is provided to an icon;
FIGS. 6A, 6B, 6C, 7A, 7B, and 8 are views showing states in which the center display and a windshield display according to the embodiment are linked; and
FIGS. 9A, 9B, 9C, and 9D are views showing a state in which a speaker, the center display, and the windshield display according to the embodiment are linked.

### DETAILED DESCRIPTION

The present invention may be modified in various ways and has various embodiments, and specific embodiments are illustrated in the drawings and will be described in detail. However, this is not intended to limit the present invention to specific embodiments, and is to be understood to include all modifications, equivalents, or substitutions that fall within the spirit and scope of the present invention. In describing the present invention, when it is determined that a detailed description of a related known technology may obscure the gist of the present invention, the detailed description thereof is omitted.

Although the terms first, second, and the like may be used to describe various components, the above components are not limited by the above terms. The above terms are merely used to distinguish one component from another.

The terminology used in the present application is used only to describe specific embodiments and is not intended to limit the present invention. Singular expressions include plural expressions unless the context clearly indicates otherwise. In the present application, it should be understood that terms such as "includes" or "has" are intended to specify the presence of a feature, number, step, operation, component, part or combination thereof described in the specification, but do not exclude in advance the possibility of the presence or addition of one or more other features, numbers, steps, operations, components, parts or combinations thereof.

Also, throughout the specification, when "connected" is described, this does not only mean that two or more components are directly connected, but also that two or more components are indirectly connected through other components, that they are electrically connected as well as physically connected, or that they are integrally connected despite being referred to by different names depending on their location or function.

Additionally, when one component is described as being formed or disposed "above (upper) or below (lower)" another component, above (upper) or below (lower) includes not only cases where the two components are in direct contact with each other, but also cases where one or more still other components are formed or disposed between the two components. Additionally, when expressed as "above (upper) or below (lower)," it may include the meaning of not only the upward direction but also the downward direction based on one component.

Hereinafter, one embodiment of a display module according to the present invention will be described in detail with reference to the attached drawings. When describing with reference to the attached drawings, identical or corresponding components are denoted by the same reference numbers and redundant descriptions thereof are omitted.

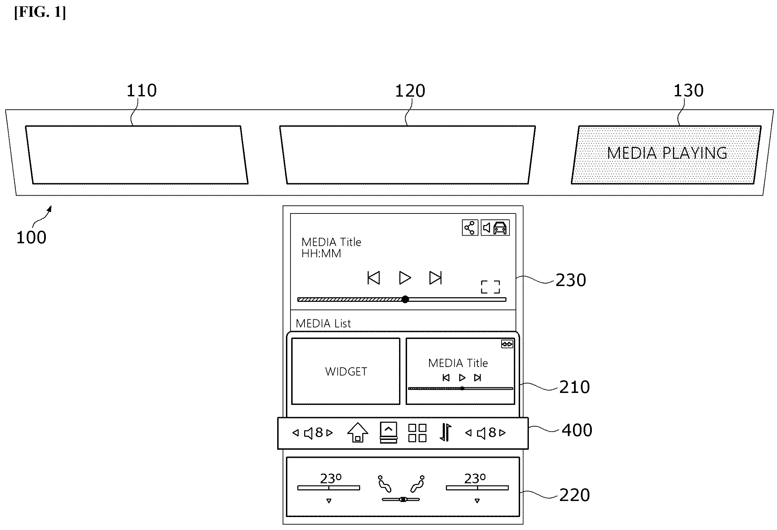

FIG. 1 is a view showing a display module according to one embodiment of the present invention.

Referring to FIG. 1, the display module according to one embodiment of the present invention may include a windshield display 100 formed in one region of a windshield, a center display 200 disposed at the front of a cockpit module of a vehicle and configured to move up and down, and a control plate 400 disposed at the front of the center display 200.

At least a region of the center display 200 may display the media function. The media function may be linked to and displayed in the windshield display 100 based on a user's input. Media may be played simultaneously on the center display 200 and the windshield display 100, or alternatively, played on either display.

The user may select and operate media to be played by operating the center display 200, and the media played on the windshield display 100 linked thereto may also be controlled accordingly.

The windshield display 100 may include a plurality of display regions. The windshield display 100 may be formed by extending from a lower end of the windshield in a width direction of the vehicle. The windshield display 100 may be divided into a plurality of regions, and each of the regions may correspond to the interior structure of the vehicle.

For example, the windshield display 100 may include three display regions. The three regions may correspond to a first display region 110 to a third display region 130. The first display region 110 to the third display region 130 may be sequentially disposed at the lower end of the windshield. The first display region 110 may be disposed in front of a driver's seat, and the third display region 130 may be disposed in front of a front passenger seat. The second display region 120 may be disposed in a center of the vehicle.

When media is played in the third display region 130, a passenger sitting in the front passenger seat may easily watch the media. When media is displayed in the first display region 110, the driver may easily watch the media. It is also possible for media to be played simultaneously in the first display region 110 and the third display region 130. Alternatively, media may be played through only the center display 200.

The center display 200 may move up and down. The display content of the center display 200 may change depending on the arrangement of the center display 200. Media may be played in at least a region of the center display 200. The size and location of the region where media is played may be adjusted depending on the arrangement of the center display 200.

The center display 200 may include a background region 230, a first window 210, and a second window 220. The first window 210 and the second window 220 may be disposed opposite each other with respect to the control plate 400. The first window 210 may be displayed so as to overlap the background region 230. That is, the background region 230 may be displayed on the entire upper side of the control plate 400. Media may be played in the background region 230, the first window 210, or the second window 220.

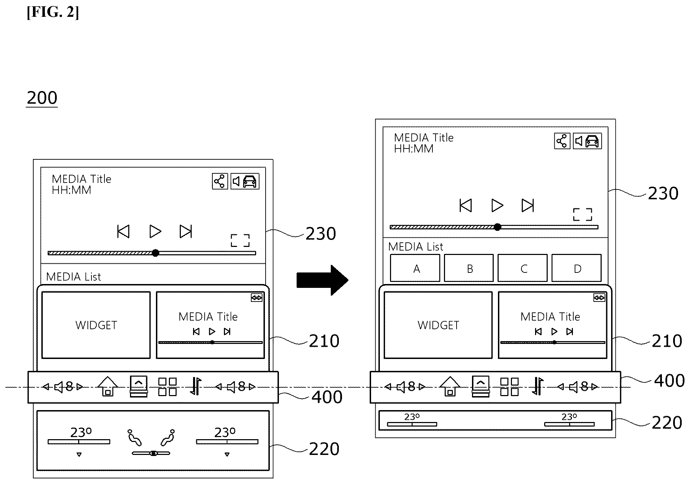

FIG. 2 is a view showing a state in which the display content changes depending on the arrangement of a center display according to the embodiment.

Referring to FIG. 2, it can be seen that the center display 200 has been moved upward. When the center display 200 moves upward, the size of the media being played may be adjusted. In this embodiment, it is shown that the region where media is displayed on the center display 200 is expanded according to the upward arrangement of the center display 200.

The center display 200 may move up and down, whereas the control plate 400 may maintain a fixed position. The content displayed on the center display 200 may be divided based on the control plate 400. The control plate 400 may be a reference for dividing the display region included in the center display 200.

The center display 200 may include the background region 230, the first window 210, and the second window 220. The background region 230 and the first window 210 may be regions that are formed on the upper side of the control plate 400. The background region 230 may be formed on the upper side of the control plate 400 and may correspond to a region displayed by extending to an upper edge of the center display 200. The first window 210 may correspond to a region that is displayed by overlapping at least a portion of the background region 230. The first window 210 may extend from the upper side of the control plate 400 as shown in FIG. 2 and may be displayed as an image covering at least a portion of the background region 230.

The first window 210 and the background region 230 may display different content. In this embodiment, as the center display 200 moves upward, the first window 210 may be displayed to have the same size at the same location based on the control plate 400. In the case of the background region 230, it can be seen that the background region 230 extends upward and is displayed in a wide region according to the movement of the center display 200.

In this case, the screen ratio of media played in the background region 230 may be adjusted. The media may be enlarged and displayed on a wider screen. The background region 230 may play the media and display information related to the media. It is shown in this embodiment that a list of media is displayed at a lower end of the portion where the media is displayed. As the center display 200 moves upward, the media list that was hidden by the first window 210 may be displayed.

The second window 220 may be a region displayed at a lower end of the control plate 400. The second window 220 may become smaller as the center display 200 moves upward.

Movement of the center display 200 may be implemented by providing an input to the control plate 400 or the center display 200. The center display 200 and the control plate 400 may recognize the user's input such as a touch. The center display 200 and the control plate 400 may display a button for operating the location of the center display 200. The user may adjust the location of the center display 200 by operating the corresponding button.

When the user wants to watch media on a larger screen, the user may increase the size of the background region 230 by moving the center display 200 upward. Media played in the background region 230 may be displayed on a larger screen.

Although this embodiment shows that media is displayed in the background region 230, it is also possible for the media to be displayed in a different region. For example, media may be displayed in at least a region of the first window 210. In FIG. 2, a widget capable of controlling a media function is displayed in the first window 210. The corresponding widget may display a playback bar for controlling media, media information, and the like. Alternatively, media playing on the corresponding widget may be displayed.

The remaining region other than the region where the media is displayed may display content for controlling other functions of the vehicle. The first window 210 may display destination arrival information, and the second window 220 may display an interface for controlling the air conditioning system of the vehicle.

The vehicle may be provided with a plurality of speakers 500. The speakers 500 may include an overall speaker 510 that provides sound to the entire space of the vehicle and seat speakers 520 and 530 that provide sound to passengers sitting in the corresponding seats. The seat speakers 520 and 530 may be provided in the headrests of the seats. The seat speakers 520 and 530 may provide sound only to the passengers sitting in the corresponding seats. The sound from the corresponding speaker may be blocked from the passengers in other seats.

Since a plurality of speakers 500 are provided, a speaker that provides the sound of the media being played may be designated. The windshield display 100, the center display 200, and the control plate 400 may be linked to the speakers 500. The sound of the media being played may be delivered to passengers through the linked speakers.

The user may specify the speakers to be linked by operating the center display 200 or the control plate 400. For example, when the seat speaker 520 of the driver's seat and the center display 200 or the windshield display 100 are linked, the sound of the media played through the display is output through the seat speaker 520 provided in the driver's seat. The sound of the media may be blocked from other seats.

Hereinafter, the user's input is represented as T. The user's input may include a touch, drag, and press, as well as any other input that the display module can recognize.

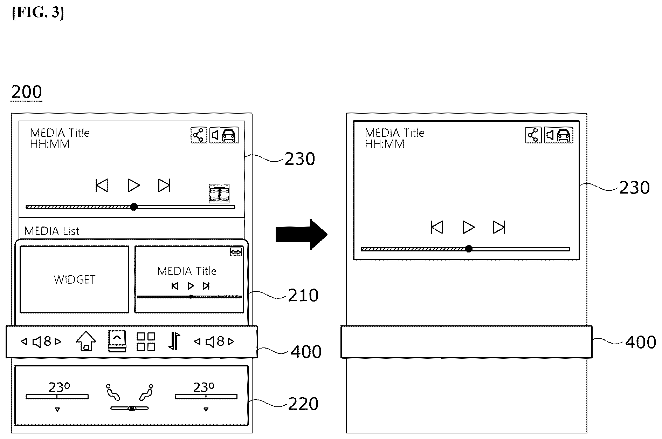

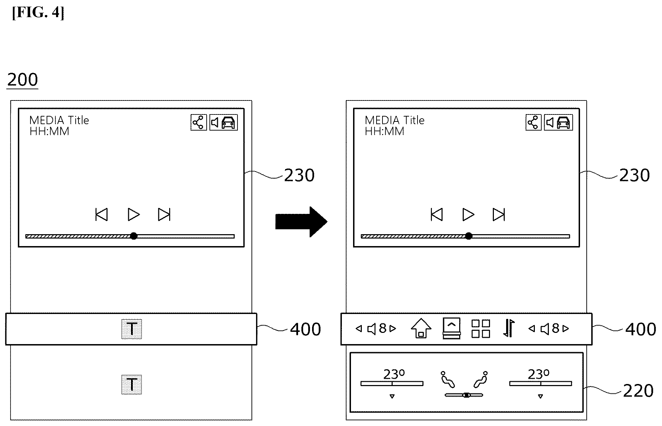

FIGS. 3 and 4 are views showing the center display displaying media in a full screen mode according to the embodiment.

Referring to FIG. 3, a state in which the media being played in the background region 230 is switched to the full screen mode is shown. The background region 230 may display an icon for switching to the full screen mode, and the user may implement the full screen mode by providing an input to the corresponding icon.

In the full screen mode, the display of the remaining region other than the region where the media is displayed may disappear. In this embodiment, since the media is displayed on an upper side of the background region 230, the display of the remaining region other than the corresponding region may disappear. Since the control plate 400 may be formed of a transparent material, and the display region of the center display 200 disposed at the lower end of the control plate 400 is displayed through the control plate 400, the display of the corresponding portion may also disappear.

The portion where the display disappears may be displayed as a black screen. In this case, the user may focus more on the screen of the media. In the full screen mode, the region where the media is played may be enlarged. Alternatively, it is possible to maintain the original size while making only the display of the remaining region disappear.

FIG. 4 shows a state in which an input is provided to the control plate 400 or the center display 200 while media is being played in the full screen mode. When the user provides an input, such as by touching the control plate 400 or the center display 200, the display content may be displayed in the region where the input is provided. The displayed content may be the same as the content displayed in the corresponding region before switching to the full screen mode. Alternatively, it is also possible to display a button for playing media.

The region where the input is provided may be displayed for a preset period of time. After the preset period of time has passed, the display of the corresponding region may disappear again. For example, when the user touches the control plate 400, a button may be displayed on the control plate 400 for 5 seconds. After 5 seconds have passed since the last input, the corresponding display may disappear.

FIG. 4 shows a state in which an input is provided to the control plate 400 or second window 220 side. The control plate 400 may display a button for controlling playback of the media, unlike conventional display content. The control plate 400 may display a button or playback bar for controlling the sound volume, whether to play, and playback speed.

The second window 220 may display conventional display content. Since the second window 220 may display an interface for controlling the air conditioning system, the corresponding interface may be displayed for a preset period of time.

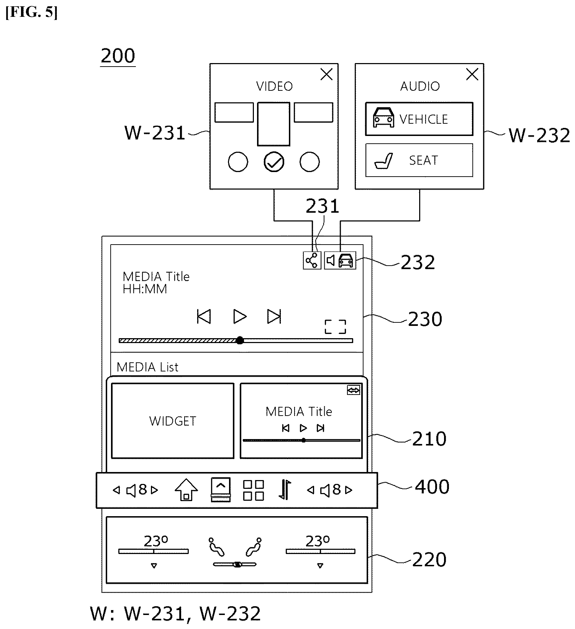

FIG. 5 is a view showing icons displayed on the center display according to the embodiment and a window displayed when an input is provided to the icon.

The center display 200 may display a link icon for designating a region of the windshield display 100 that is linked to the center display 200. The link icon may include a first link icon 231 that links the windshield display 100 and the center display 200. The link icon may include a second link icon 232 that links the speakers and the center display 200.

When the user provides an input to the link icon, a link window W may be displayed. The link window W may be displayed while overlapping the background region 230 and the first window 210. The link window W may display a list of regions of the windshield display 100 and speakers, which can be linked. The user may select the speaker and the region of the windshield display 100 that he or she wishes to link.

The link window may include a first link window W-231 and a second link window W-232. The first link window W-231 may display a list of display regions in which media can be played. The second link window W-232 may display a list of speakers 500 that are capable of outputting sound of the media.

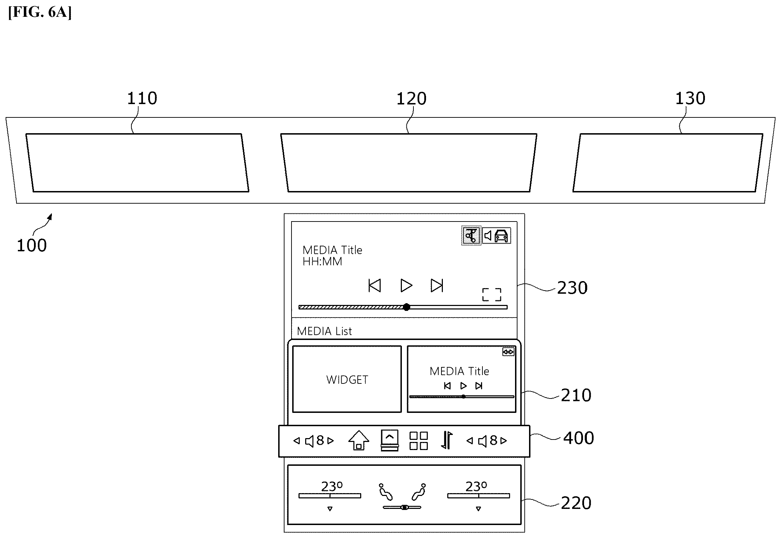

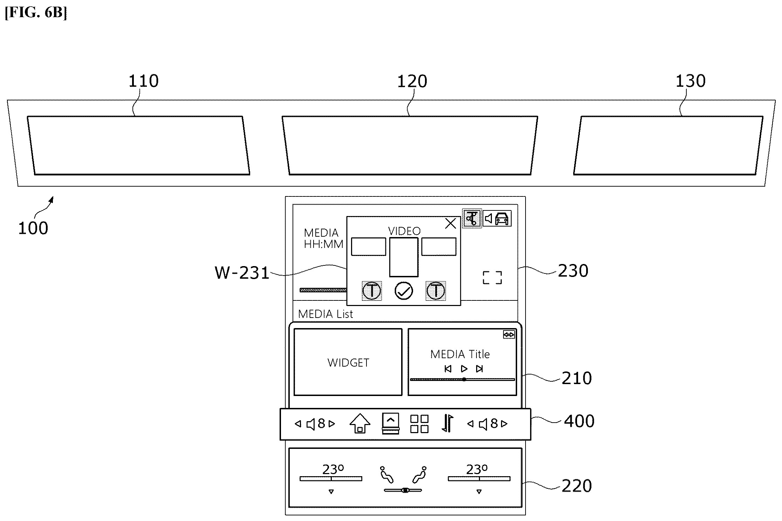

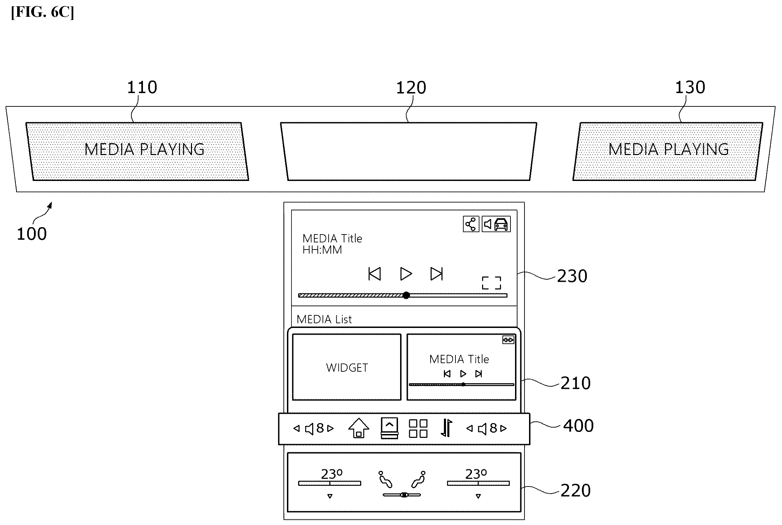

FIGS. 6 to 8 are views showing states in which the center display and the windshield display according to the embodiment are linked.

Referring to FIG. 6, a state in which the user causes media to be displayed in a specific region of the windshield display 100 is shown. The user may operate the center display 200 by touching the first link icon 231 displayed on the center display 200 so that the first link window W-231 is displayed. The first link icon 231 may be displayed on one side of the background region 230.

The first link window W-231 may display the display region of the windshield and the center display 200. In this embodiment, two display regions 110 and 130 of the windshield display 100 and the center display 200 may be displayed. The display region may be the first display region 110 disposed in front of the driver's seat and the third display region 130 disposed in front of the passenger seat. In the case of the second display region 120, since the second display region 120 is disposed at a center of the vehicle and is not be easily visible to a passenger, the center display 200 may perform a media playback function instead of the second display region 120. Alternatively, the second display region 120 can also independently perform the media playback function. The second display region 120 may provide the media playback function simultaneously with the first display region 110 or the third display region 130.

In the case of media being played through the center display 200, when an input is provided to the first link icon 231 as shown in FIG. 6A, the first link window W-231 may be displayed. The first link window W-231 may display a list of display regions that can be linked.

As shown in FIG. 6B, the first link window W-231 may display the display region of the windshield display 100 and the center display 200. The user may select a region to be displayed by providing an input to the first link window W-231. In FIG. 6B, selection of the first display region 110 and the third display region 130 is shown.

When the user provides an input to select a region to be linked, a region to be linked may change as shown in FIG. 6C. In FIG. 6B, media may be played in the first display region 110 and the third display region 130 of the windshield display 100 in response to the user's input.

When media is played through the windshield display 100, the center display 200 may display information related to the playback of the media without playing the media. Referring to FIG. 6C, a playback button and a button capable of operating the playback of media, such as a media play bar, may be displayed.

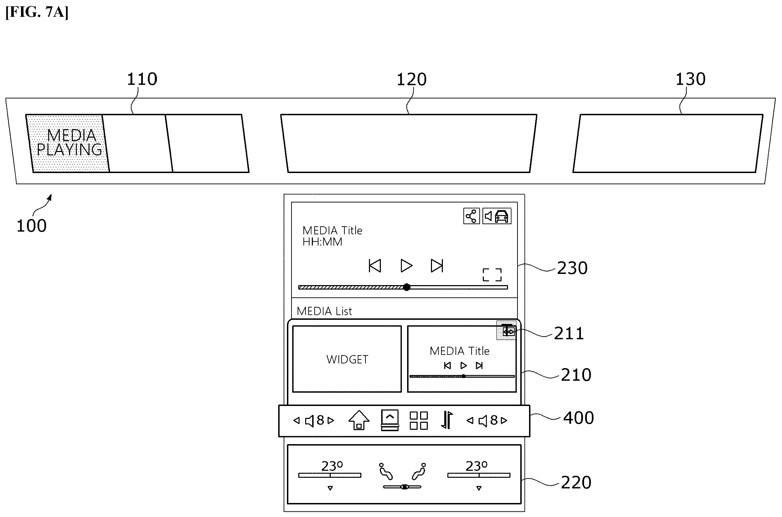

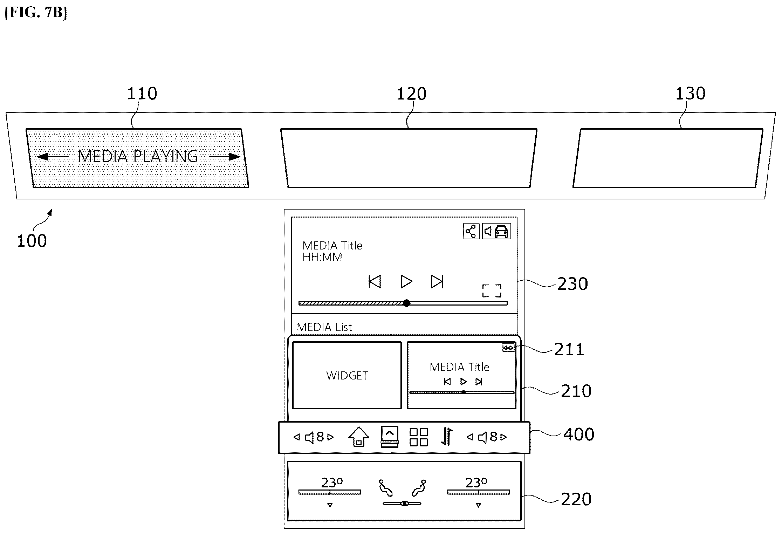

Referring to FIG. 7, a state in which the size of the portion where the media displayed in the first display region 110 of the windshield display 100 is displayed is expanded can be seen.

FIG. 7A corresponds to a situation where media is played only in a portion of the first display region 110. The remaining portion of the first display region 110 may display another function or may be blank. Each of the display regions may be divided into a plurality of regions and may display different functions or information.

FIG. 7A shows a state in which the first display region 110 is divided into three regions. Media may be played in one of these regions. The center display 200 may provide an icon for adjusting the size of the region where the media is played. The user may adjust the size of a media playback region by providing an input to the link icon.

FIG. 7 shows a state in which a third link icon 211 is displayed in the first window 210. The third link icon 211 may be displayed in a widget displayed in the first window 210. This widget may display information related to the media being played. When the user provides an input to the third link icon 211, the size of the media playback region displayed in the first display region 110 may change.

Referring to FIG. 7B, it can be seen that the user has enlarged the size of the region where media is played by providing an input to the third link icon 211. The media may be played throughout the entire first display region 110.

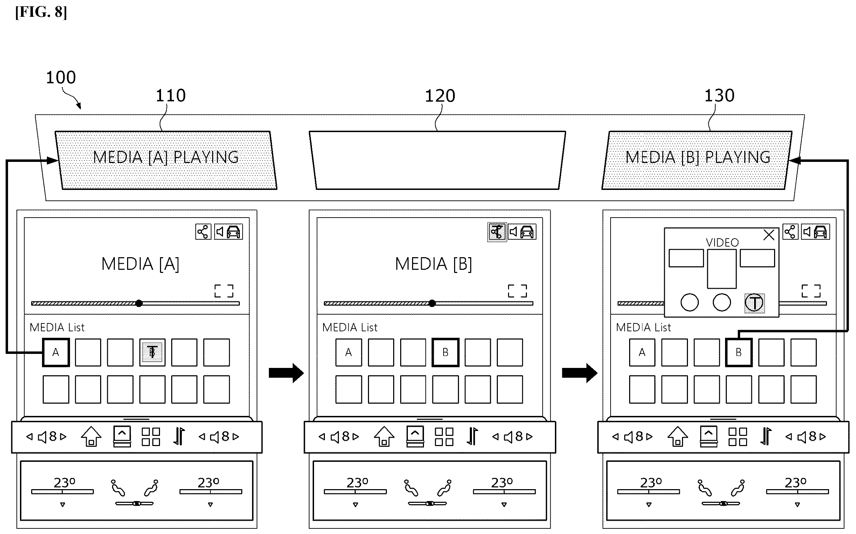

FIG. 8 shows a state in which each region of the windshield display plays different media. Referring to FIG. 8, media [A] is played in the first display region 110 of the windshield display 100. While the media [A] is being played, the user may select the desired media from the list of media displayed on the center display 200.

When the user provides an input for additional media to be played, the corresponding media may be activated in the background region 230 of the center display 200. In this embodiment, media [B] may be selected. In a state in which the media [B] is activated, the user may provide an input to the first link icon.

When the input is provided to the first link icon 231, the first link window W-231 including a list of display regions that are capable of playing the media [B] is displayed. The user may select a display region to be linked in the first link window W-231. In this embodiment, the user may select the third display region 130, and the media [B] may be played in the third display region 130.

When the above process is performed sequentially, different media may be played in a plurality of display regions. As shown in FIG. 8, when the media [A] is played in the first display region 110 and the media [B] is played in the third display region 130, a passenger sitting in the driver's seat and a passenger sitting in the front passenger seat may watch different media.

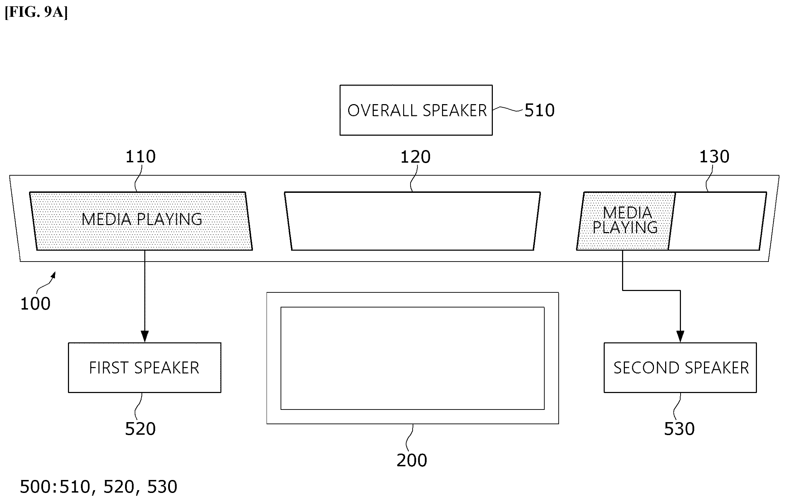

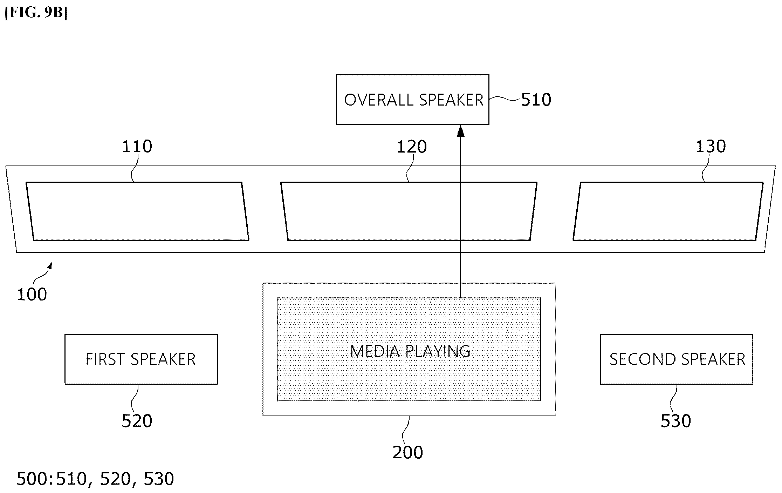

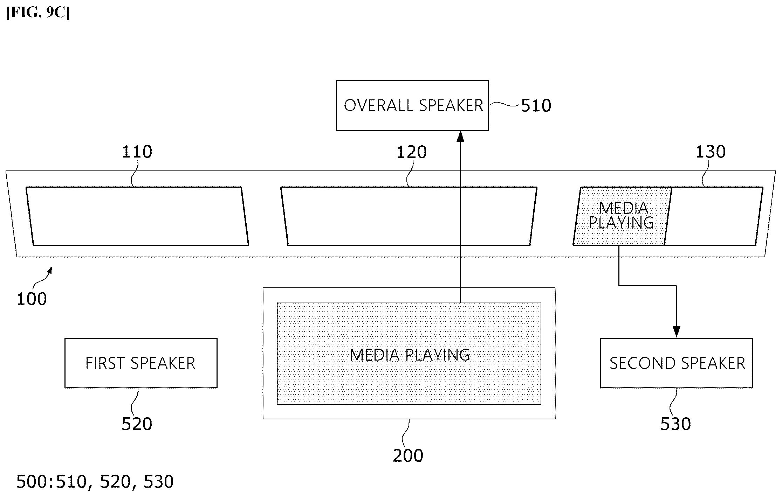

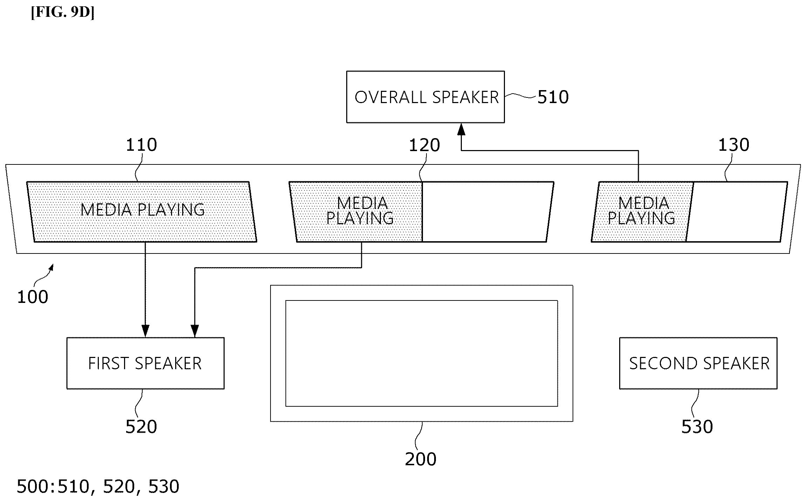

FIG. 9 is a view showing a state in which the speaker, the center display, and the windshield display according to the embodiment are linked.

Referring to FIGS. 9A to 9D, the display module according to one embodiment of the present invention may further include the speakers 500. The speakers 500 may include the overall speaker 510 and the seat speakers 520 and 530. The seat speakers 520 and 530 may serve to provide the sound of the media to a passenger sitting in each seat. The overall speaker 510 may serve to provide the sound of the media to all passengers in the vehicle.

Selection of the speaker 500 linked to the media may be implemented by operating the second link icon 232. When the user provides an input to the second link icon 232, the second link window W-232 may be displayed. The second link window W-232 may display a list of speakers 500 that can be linked.

The seat speakers 520 and 530 may be installed in the headrests of the seat. The headrest may provide sound toward the user's ears. A first seat speaker 520 may be installed in a headrest of the driver's seat. A second seat speaker 530 may be installed in a headrest of the passenger seat.

The user may set a speaker to provide sound by operating the center display 200 and the control plate 400. FIG. 9 shows various examples of speakers that are linked to the media.

FIG. 9A shows a situation in which different media are played in the first display region 110 and the third display region 130 of the windshield display 100. The first seat speaker 520 may be linked to the first display region 110 to provide sound corresponding thereto to a passenger sitting in the driver's seat. The second seat speaker 530 may be linked to the third display region 130 to provide sound corresponding thereto to a passenger sitting in the front passenger seat.

FIG. 9B shows a situation in which media is played on the center display 200. In this case, when the overall speaker 510 is linked to the center display 200, sound may be provided in the vehicle through the overall speaker 510.

FIG. 9C shows a state in which different media are played in the center display 200 and the third display region 130 of the windshield display 100. The overall speaker 510 may be linked to the media played on the center display 200. The second seat speaker 530 may be linked to the media played in the third display region 130.

FIG. 9D shows a state in which the same media is played in the first display region 110 and the center display 200, and different media is played in the third display region 130. The first seat speaker 520 may be linked to the first display region 110 and the center display 200 to provide sound corresponding thereto. The overall speaker 510 may be linked to the third display region 130 to provide sound corresponding thereto.

The linkage of the display region of the media and the speaker shown in FIG. 9 is only an example, and combinations of other display regions and speakers may also be applied.

According to one embodiment of the present invention, a center display and a windshield display can be linked to provide a media playback function, and a user can operate a media function through the center display and a control plate.

The various beneficial advantages and effects of the present invention are not limited to the above-described contents, and will be more easily understood in the process of describing specific embodiments of the present invention.

Although the present invention has been described above with reference to specific embodiments thereof, it will be understood by those skilled in the art that various modifications and changes may be made to the present invention without departing from the spirit and scope of the present invention as set forth in the claims below.

## Claims

1. A display module comprising:
a windshield display disposed in one region of a windshield;
a center display disposed at a front of a cockpit module of a vehicle and configured to move up and down; and
a control plate disposed at a front of the center display,
wherein at least a region of the center display is configured to display a media function, and at least a region of the windshield display is linked to the center display and configured to display the media function based on an input of a user.

2. The display module of claim 1, wherein the center display includes a background region disposed on an upper side of the control plate, a first window covering a portion of the background region on the upper side of the control plate, and a second window displayed on a lower side of the control plate, and
the media function is displayed in the background region.

3. The display module of claim 2, wherein the background region has a boundary reset according to an arrangement of the center display, and the display of the media function displayed in the background region is configured to change in response to a size of the background region.

4. The display module of claim 2 or 3, wherein the media function displayed in the background region is controlled through an operation button displayed on the center display or the control plate.

5. The display module of any one of claims 2 to 4, wherein, when playing media on the center display in a full screen mode, the display of a region other than the background region disappears.

6. The display module of claim 5, wherein, in the full screen mode, when an input is provided to the center display or the control plate, a region to which the input is provided is activated for a preset time.

7. The display module of any one of claims 1 to 6, wherein the center display is configured to display a link icon, and the user selects a region of the windshield display in which the media function is displayed by providing an input to the link icon.

8. The display module of claim 7, wherein, when the input is provided to the link icon, a link widget is displayed, and the link widget displays a list of speakers and display regions included in the windshield display linked to the center display.

9. The display module of any one of claims 1 to 8, wherein the windshield display includes a plurality of display regions, and the plurality of display regions are configured to play different media.

10. The display module of any one of claims 1 to 9, wherein at least a region of the windshield display is linked to the center display to display the media function, and a size of the region in which the media function is displayed is adjusted based on operation of the center display.
